# EUROPÄISCHE PATENTSCHRIFT

(11) **EP 3 925 438 B1**
(45) Veröffentlichungstag und Bekanntmachung des Hinweises auf die Patenterteilung: **03.09.2025**
(21) Anmeldenummer: 21188864.9
(22) Anmeldetag: 30.07.2021
(51) Int. Cl.: A01K 3/00

(54) **WEIDEZAUNPFAHL FÜR WEIDEZAUNNETZE**
PASTURE FENCE POST FOR PASTURE FENCE NETWORKS
POTEAU DE CLÔTURE POUR PÂTURAGE ÉLASTIQUE POUR FILETS DE CLÔTURE POUR PÂTURAGE

(43) Veröffentlichungstag der Anmeldung: 22.12.2021
(73) Patentinhaber: Albert Kerbl GmbH, 84428 Buchbach (DE)
(72) Erfinder: Platter, Florian, 84539 Ampfing (DE); Buhmann, Elmar, 88299 Leutkirch (DE); Öxle, Markus, 88279 Amtzell (DE)
(74) Vertreter: Kalkoff & Partner Patentanwälte mbB

(56) Entgegenhaltungen:
- EP-A2- 2 281 450
- GB-A- 2 118 990
- US-A1- 2019 085 587

## Beschreibung

Die Erfindung betrifft einen Weidezaunpfahl für Weidezaunnetze, mit
- einem durch Glasfasern verstärkten Pfahlgrundkörper,
- einem in einem Bereich eines ersten Endes des Pfahlgrundkörpers angeordneten Aufnahmeelement mit einer ersten Ausnehmung zur Aufnahme eines ersten Abschnitts des Weidezaunnetzes,
- einem in einem Bereich eines dem ersten Ende gegenüberliegenden zweiten Endes des Pfahlgrundkörpers angeordneten Vorsprung mit einer zweiten Ausnehmung zur Aufnahme eines zweiten Abschnitts des Weidezaunnetztes und
- einem im Bereich des zweiten Endes des Pfahlgrundkörpers angeordneten Bodenelement mit mindestens einem ersten stabförmigen Endabschnitt.

Weidezaunpfähle der eingangs genannten Art werden dazu benutzt, um den Aufenthaltsbereich von Tieren jeglicher Art, beispielsweise Kühe, Pferde, Geflügel, Schafe, Kaninchen oder Wildtiere durch ein an mehreren flexibel platzierten Weidezaunpfählen aufgenommenes Weidezaunnetz zu begrenzen. Ferner werden die Tiere innerhalb des durch die Weidezaunpfähle und das Weidezaunnetz begrenzten Aufenthaltsraum vor Eindringlingen von außerhalb, z.B. einem Wolf oder einem Fuchs, geschützt.

Zur Aufnahme des Weidezaunnetzes weist ein Weidezaunpfahl üblicherweise einen metallischen Pfahlgrundkörper und mehrere Ausnehmungen auf. Der Weidezaun ist mit unterschiedlichen Abschnitten in den Ausnehmungen angeordnet und durch die flexible Platzierung mehrerer Weidezaunpfähle in einem Untergrund, z.B. einer Wiese oder einem Lehmboden, spannbar. Ein Weidezaunpfahl weist zur Platzierung in dem Untergrund ein Bodenelement mit einem stabförmigen Endabschnitt auf, wobei der stabförmige Endabschnitt das Einbringen des Weidezaunpfahls in den Untergrund vereinfacht.

Neben aus metallischen Werkstoffen hergestellten Weidezaunpfählen sind bereits aus Kunststoff hergestellte Weidezaunpfähle bekannt. Um die gegenüber einem aus einem metallischen Werkstoff gebildeten Pfahlgrundkörper geringere Festigkeit und Steifigkeit eines aus einem reinen Kunststoff gebildeten Pfahlgrundkörpers wesentlich zu verbessern, ist es bereits bekannt, einen Glasfasern aufweisenden Kunststoff zur Herstellung der Pfahlgrundkörper zu verwenden. Die verbesserte Festigkeit und Steifigkeit sind jedoch stark von der unzuverlässigen Anordnung und Ausrichtung der Glasfasern abhängig. Eine fehlerhafte Anordnung und Ausrichtung der Fasern führt zu einer strukturellen Schwächung des Weidezaunpfahls wodurch der Weidezaunpfahl schon bereits beim Einbringen des Bodenelements oder während der Nutzung versagt und bricht.

Die US 2019/085587 A1 offenbart einen Pfosten mit einem zumindest über einen Teil der Länge umspritzten Schaft, der aus einem faserverstärkten Kunststoff, z.B. Fiberglas gebildet ist. Entlang der Länge des Schaftes sind mehrere Drahtbefestigungen vorgesehen.

Die GB 2 118 990 A betrifft einen Pfosten für einen elektrischen Zaun mit einem geraden, aus einem verstärkten Kunststoff hergestellten Stababschnitt, einem an dem Stababschnitt befestigten Basisteil und zwei im Abstand zueinander angeordneten Kunststoffisolierteilen. Das Basisteil und die Kunststoffisolierteile sind direkt auf den Stababschnitt gespritzt.

Der Erfindung liegt die Aufgabe zugrunde, einen unter Verwendung eines mit Glasfasern verstärkten Kunststoffs hergestellten Weidezaunpfahl bereitzustellen, der eine ausreichende Stabilität aufweist und somit zerstörungsfrei ein wiederholtes Platzieren des Bodenelements in einem Untergrund erlaubt.

Die Erfindung löst die Aufgabe durch einen Weidezaunpfahl mit den Merkmalen des Anspruchs 1. Vorteilhafte Weiterbildungen des Weidezaunpfahls sind in den abhängigen Ansprüchen angegeben.

Kennzeichnend für den erfindungsgemäßen Weidezaunpfahl ist, dass der Pfahlgrundkörper in einem Bereich des ersten Endes oder in einem Bereich des zweiten Endes angegossen worden ist.

Der Pfahlgrundkörper ist zylinderartig ausgebildet und weist eine Mantelfläche sowie einen sich zwischen den beiden gegenüberliegenden Enden erstreckenden kreisförmigen, ellipsoiden oder polygonalen Querschnitt auf. Darüber hinaus ist der Pfahlgrundkörper aus einem Verbundwerkstoff mit einem Matrixwerkstoff, z.B. einem Kunststoffwerkstoff und einem Faserwerkstoff, erfindungsgemäß Glasfasern, gebildet. Die Glasfasern sind innerhalb des Matrixwerkstoffs am Pfahlgrundkörper angeordnet.

Der Weidezaunpfahl ist am ersten oder am zweiten Ende angegossen worden. Dies ist durch einen Angusspunkt erkennbar, der in einem Bereich am ersten Ende oder in einem Bereich am zweiten Ende des Pfahlgrundkörpers durch das Angießen gebildet ist. Der Angusspunkt weist eine kreisförmig auf dem Pfahlgrundkörper, vorzugsweise auf der Mantelfläche des

Pfahlgrundkörpers, ausgebildete Vertiefung und/oder Hervorhebung auf und beschreibt die Position, an der der Pfahlgrundkörper in einem Herstellverfahren, z.B. einem Spritzgießverfahren, angegossen worden ist. Der Angusspunkt ist demnach beispielsweise in der Nähe eines Endes des Pfahlgrundkörpers auf der Mantelfläche angeordnet und in einem Abstand von bis zu 50 mm, bevorzugt bis zu 40 mm, besonders bevorzugt bis zu 30 mm beabstandet zu einer am ersten Ende angeordneten, ersten Stirnfläche oder einer am zweiten Ende angeordneten zweiten Stirnfläche des Pfahlgrundkörpers angeordnet. Eine Stirnfläche ist jeweils durch den abschließenden Querschnitt an einem Ende des Pfahlgrundkörpers definiert.

Im Bereich des ersten Endes des Pfahlgrundkörpers ist das Aufnahmeelement mit der ersten Ausnehmung zur Aufnahme des ersten Abschnitts des Weidezaunnetzes angeordnet. Im Bereich des ersten Endes bedeutet für das Aufnahmeelement, dass dieses vorzugsweise in der Nähe der ersten Stirnfläche angeordnet ist. Bevorzugt grenzt das Aufnahmeelement derart an die erste Stirnfläche an, dass das Aufnahmeelement mit einer Unterseite an dem Pfahlgrundkörper, bzw. der ersten Stirnfläche des Pfahlgrundkörpers anliegt. Folglich ist die Unterseite des Aufnahmeelements bevorzugt senkrecht zu einer Längsachse des Pfahlgrundkörpers angeordnet. Die erste Ausnehmung ist ein das Aufnahmeelement durchdringender freier Bereich, der derart ausgebildet ist, dass der erste Abschnitt des Weidezaunnetzes, beispielsweise ein erster elektrischer Leiter, z.B. eine erste Litze, oder ein Bereich einer ersten Masche, in der ersten Ausnehmung aufnehmbar ist.

Der Vorsprung mit der zweiten Ausnehmung zur Aufnahme eines zweiten Abschnitts des Weidezaunnetzes ist im Bereich des zweiten Endes des Pfahlgrundkörpers angeordnet. Im Bereich des zweiten Endes bedeutet für den Vorsprung, dass dieser vorzugsweise in der Nähe zu der zweiten Stirnfläche angeordnet ist. Bevorzugt ist der Vorsprung auf der Mantelfläche des Pfahlgrundkörpers angeordnet und grenzt an die zweite Stirnfläche des Pfahlgrundkörpers an. Darüber hinaus erhebt sich der Vorsprung vorzugsweise in eine von der Mantelfläche abgewandte Richtung. Die zweite Ausnehmung ist ein den Vorsprung durchdringender freier Bereich, der derart ausgebildet ist, dass der zweite Abschnitt des Weidezaunnetzes, beispielsweise ein zweiter elektrischer Leiter, z.B. eine zweite Litze, oder ein Bereich einer zweiten Masche, in der zweiten Ausnehmung aufnehmbar ist. Beispielsweise weist die zweite Ausnehmung eine kreisförmige oder polygonartige Kontur auf.

Im Bereich des zweiten Endes des Pfahlgrundkörpers ist das Bodenelement angeordnet. Das Bodenelement weist einen kreisförmigen, ellipsoiden oder polygonalen Querschnitt und mindestens einen ersten stabförmigen Endabschnitt auf, der beispielsweise in einem Winkel oder parallel zu der Längsachse des Pfahlgrundkörpers angeordnet ist. Der stabförmige Endabschnitt weist vorzugweise eine Verjüngung, z.B. eine Spitze auf, mit der ein Einbringen des Weidezaunpfahls in einen Untergrund begünstigt wird. Ferner kann der stabförmige Endabschnitt austauschbar an dem Bodenelement montiert, z.B. mit diesem verschraubt sein, oder einstückig mit dem Bodenelement ausgebildet sein.

Die jeweils am Aufnahmeelement und am Vorsprung angeordneten Ausnehmungen gewährleisten eine sichere Aufnahme des Weidezauns an einem Weidezaunpfahl. Durch die Verstärkung des Pfahlgrundkörpers können die Festigkeit und die Steifigkeit des Weidezaunpfahls wesentlich verbessert werden. Dadurch, dass der Pfahlgrundkörper im Bereich eines der beiden Enden angegossen worden ist, wird gewährleistet, dass der Weidezaunpfahl eine hohe Bruchfestigkeit aufweist und die Glasfasern monodirektional ausgerichtet sind und sich nicht in zwei oder mehrere unterschiedliche Richtungen ausrichten können. Hierdurch kann auf vorteilhafte Weise einer durch eine fehlerhafte Ausrichtung der Glasfasern entstehenden strukturellen Schwächung des Weidezaunpfahls entgegengewirkt werden und der Weidezaunpfahl weist über seine gesamte Länge eine gleichbleibende Festigkeit auf.

Erfindungsgemäß ist vorgesehen, dass die Glasfasern entlang einer Längsachse des Pfahlgrundkörpers in Richtung auf das dem angegossenen Ende gegenüberliegend angeordnete Ende des Pfahlgrundkörpers ausgerichtet sind. Die Glasfasern sind vom Angusspunkt in Richtung auf das dem Angusspunkt gegenüberliegend angeordnete Ende des Pfahlgrundkörpers ausgerichtet. Der Angusspunkt ist an dem Einen von dem ersten Ende oder dem zweiten Ende angeordnet, wodurch die Glasfasern in Richtung auf das Andere von dem ersten Ende oder dem zweiten Ende ausgerichtet sind. Vorzugsweise sind die Glasfasern überwiegend oder bevorzugt vollständig parallel zur Längsachse des Pfahlgrundkörpers angeordnet. Die erfindungsgemäße Ausrichtung der Glasfasern ermöglicht eine Verbesserung der Festigkeit und der Steifigkeit des Weidezaunpfahls und gewährleistet insbesondere eine hohe Festigkeit und Steifigkeit quer zur Längsachse des
Weidezaunpfahls.

Der Pfahlgrundkörper kann mindestens einen Anteil von 15 % an Glasfasern aufweisen. Nach einer vorteilhaften Weiterbildung der Erfindung ist jedoch vorgesehen, dass der Pfahlgrundkörper einen Anteil von 15- 60 %, bevorzugt 20- 40 %, besonders bevorzugt 30 % an Glasfasern aufweist. Der Anteil an Glasfasern bezieht sich auf das Gewicht des Pfahlgrundkörpers, sodass der Pfahlgrundkörper beispielsweise einen Glasfaseranteil von 30 Gew.-% aufweist. Bei einem Glasfaseranteil von über 60 % sind die Glasfasern oft nicht ausreichend von dem Matrixwerkstoff, z.B. einem Kunststoffwerkstoff benetzt. Daher ist ein Glasfaseranteil von über 60%, bevorzugt über 40 %, besonders bevorzugt über 30 % vorzugsweise nicht vorgesehen. Darüber hinaus ist der Pfahlgrundkörper bevorzugt aus einem Polyamidwerkstoff als Matrixwerkstoff mit einem Glasfaseranteil von 30 Gew.-% ausgebildet. Die Glasfasern sind als Kurzglasfasern z.B. mit einer Länge von etwa 140 bis 210 µm oder als Langglasfasern z.B. mit einer Länge von 8 bis 25 mm ausgebildet. Bevorzugt ist der Pfahlgrundkörper durch Kurzglasfasern verstärkt. Durch den definierten Anteil an Glasfasern kann auf vorteilhafte Weise eine hohe Verstärkung des Weidezaunpfahls erreicht und einem Durchbiegen des Weidezaunpfahls entgegengewirkt werden.

Das Aufnahmeelement und/oder der Vorsprung können austauschbar an dem Pfahlgrundkörper, beispielsweise kraftschlüssig, z.B. verschraubt, oder formschlüssig, z.B. mittels einer Schnappverbindung, montiert sein. Nach einer vorteilhaften Ausgestaltung der Erfindung ist jedoch vorgesehen, dass der Pfahlgrundkörper einstückig mit dem Aufnahmeelement und/oder dem Vorsprung ausgebildet ist.

Unter einstückig wird für den Pfahlgrundkörper verstanden, dass dieser mit dem Aufnahmeelement und/oder dem Vorsprung in einem einstufigen oder alternativ zweistufigen Herstellungsverfahren, z.B. einem Spritzgießverfahren, hergestellt worden ist. Hierbei können das Aufnahmeelement und/oder Vorsprung z.B. aus dem gleichen Werkstoff wie der Pfahlgrundkörper oder alternativ aus einem anderen Werkstoff, z.B. einem anderen Kunststoffwerkstoff gebildet sein. Folglich sind das Aufnahmeelement und/oder der Vorsprung z.B. im Spritzgießverfahren gleichzeitig durch den Angusspunkt am Pfahlgrundkörper angegossen oder als Einlegeteil vorher in eine Kavität des Spritzgießwerkzeugs eingelegt und stoffschlüssig durch den plastifizierten Kunststoffwerkstoff mit dem Pfahlgrundkörper verbunden worden.

Das Aufnahmeelement und/oder der Vorsprung weisen jeweils bspw. einen weiteren Angusspunkt auf, falls das Aufnahmeelement und/oder der Vorsprung als Einlegeteil stoffschlüssig mit dem Pfahlgrundkörper verbunden worden ist und das Aufnahmeelement und/oder der Vorsprung aus einem Kunststoffwerkstoff gebildet ist. Das Aufnahmeelement und/oder der Vorsprung können beispielsweise Hinterschneidungen aufweisen, die vorzugsweise von dem Pfahlgrundkörper umschlossen sind. Dadurch, dass der Pfahlgrundkörper einstückig mit dem Aufnahmeelement und/oder dem Vorsprung ausgebildet ist, können die Herstellungskosten in vorteilhafter Weise reduziert werden. Darüber hinaus kann besonders zuverlässig gewährleistet werden, dass das Aufnahmeelement und der Vorsprung den durch Bewegungen des Weidezaunnetzes, beispielweise durch Windströmungen oder Tierkontakt mit dem Weidezaunnetz entstehenden Belastungen standhalten.

Die erste Ausnehmung kann in beliebiger Art und Weise, beispielsweise mit einem kreisförmigen oder polygonartigen Querschnitt ausgebildet sein. Nach einer vorteilhaften Weiterbildung der Erfindung ist jedoch vorgesehen, dass die erste Ausnehmung einen zur Längsachse des Pfahlgrundkörpers senkrecht angeordneten doppelkreisförmigen Querschnitt aufweist.

Der doppelkreisförmige Querschnitt weist zwei kreisförmige Bereiche auf, die sich tangieren oder alternativ in zwei, bevorzugt auf der Längsachse des Pfahlgrundkörpers angeordneten Schnittpunkten, schneiden, sodass eine imaginäre Schnittmenge der beiden kreisförmigen Bereiche eine ellipsenförmige Außenkontur aufweist. Die erste Ausnehmung ist demnach ein doppelkreisförmiger, das Aufnahmeelement senkrecht zur Längsachse des Pfahlgrundkörpers durchdringender, freier Bereich.

Der doppelkreisförmige Querschnitt ermöglicht auf vorteilhafte Weise die flexible und effiziente Aufnahme des ersten Abschnitts des Weidezaunnetzes. Beispielsweise kann der erste Abschnitt des Weidezauns flexibel in einem der beiden kreisförmigen Bereiche der ersten Ausnehmung aufgenommen werden oder alternativ können zur effizienten Aufnahme zwei Weidezaunnetze jeweils mit einem ersten Abschnitt in einem kreisförmigen Bereich der ersten Ausnehmung aufgenommen werden.

Die erste Ausnehmung kann in eine beliebig an dem Aufnahmeelement angeordnete Öffnung übergehen. Nach einer vorteilhaften Weiterbildung der Erfindung ist jedoch vorgesehen, dass die erste Ausnehmung entlang der Längsachse in der vom Pfahlgrundkörper abgewandten Richtung in eine Öffnung übergeht. Die Öffnung weist einen vorzugsweise parallel zum doppelkreisförmigen Querschnitt der ersten Ausnehmung angeordneten, kreisförmigen oder polygonartigen, z.B. viereckigen, Querschnitt auf, der derart an den Querschnitt, bzw. den doppelkreisförmigen Querschnitt der ersten Ausnehmung angrenzt, dass die erste Ausnehmung in die Öffnung übergeht. Die Öffnung ist demnach ein das Aufnahmeelement durchdringender freier Bereich der in die erste Ausnehmung übergeht. Ferner weist die Öffnung vorzugsweise eine koaxial zur Längsachse des Pfahlgrundkörpers angeordnete Symmetrielinie auf. Dadurch, dass die erste Ausnehmung in die Öffnung übergeht, kann gewährleistet werden, dass der erste Abschnitt des Weidezaunnetzes einfach und zuverlässig in der ersten Ausnehmung aufgenommen werden kann.

Die Öffnung kann eine beliebige an den ersten Abschnitt des Weidezaunnetztes angepasste Breite aufweisen. Nach einer vorteilhaften Ausgestaltung der Erfindung ist jedoch vorgesehen, dass die Breite der Öffnung entlang der Längsachse des Pfahlgrundkörpers stetig zunimmt oder abnimmt. Dadurch weist die Öffnung vorzugsweise einen trapezförmigen Querschnitt auf, der bevorzugt wie ein gleichschenkliges und/oder symmetrisches Trapez ausgebildet ist, wobei die Symmetrielinie des Trapezes parallel zu der Längsachse des Pfahlgrundkörpers angeordnet ist. Vorzugsweise nimmt die Breite der Öffnung entlang der Längsachse in der vom Pfahlgrundkörper abgewandten Richtung zu. Ferner ist die Breite der Öffnung vorzugsweise derart an die Form des ersten Abschnitts des Weidezaunnetzes, z.B. den Durchmesser einer Litze, angepasst, dass die geringste Breite der Öffnung beispielsweise kleiner ist als der Durchmesser der ersten Litze. Durch die Zu- oder Abnehmende Breite der Öffnung kann auf vorteilhafte Weise ermöglicht werden, dass der erste Abschnitt des Weidezaunnetzes besonders schnell in der ersten Ausnehmung angeordnet werden kann.

Das Bodenelement kann aus einem beliebigen Werkstoff gebildet sein, der eine höhere Festigkeit aufweist als der Werkstoff aus dem der Pfahlgrundkörper gebildet ist. Nach einer vorteilhaften Weiterbildung der Erfindung ist jedoch vorgesehen, dass das Bodenelement aus einem metallischen Werkstoff gebildet ist. Beispielsweise ist das Bodenelement aus einem Stahlwerkstoff gebildet. Bevorzugt weist das Bodenelement eine Oberflächenbeschichtung, z.B. eine Lack- oder Zinkschicht auf. Dadurch, dass das Bodenelement aus einem metallischen Werkstoff gebildet ist, kann auf vorteilhafte Weise ermöglicht werden, dass der Weidezaunpfahl zerstörungsfrei durch ein Bodenelement hoher Festigkeit einfacher und häufiger in einen Untergrund einbringbar ist.

Das Bodenelement kann in beliebiger Art und Weise mit dem Pfahlgrundkörper verbunden sein, z.B. weist das Bodenelement ein Innengewinde oder Außengewinde auf und ist auf einem entsprechend am Pfahlgrundkörper angeordneten Außengewinde oder Innengewinde im Eingriff gebracht. Nach einer vorteilhaften Weiterbildung der Erfindung ist jedoch vorgesehen, dass das Bodenelement einen vom Pfahlgrundkörper umschlossenen Verbindungsabschnitt aufweist, der sich über mindestens ein Drittel, bevorzugt ein Viertel, besonders bevorzugt ein Fünftel der Länge des Bodenelements erstreckt. Der Verbindungsabschnitt ist der am zweiten Ende des Pfahlgrundkörpers angeordnete von diesem umschlossene Bereich des Bodenelements. Das Bodenelement ist beim Herstellungsverfahren, z.B. einem Spritzgießverfahren, des Pfahlgrundkörpers derart mit dem Verbindungsabschnitt in der Kavität angeordnet, dass der plastifizierte Kunststoffwerkstoff als Kunststoffschmelze den Verbindungsabschnitt umströmt. Durch den vom Pfahlgrundkörper umschlossenen Verbindungsabschnitt kann auf vorteilhafte Weise gewährleistet werden, dass das Bodenelement durch die Vermeidung zusätzlicher Arbeitsschritte kostengünstig mit dem Pfahlgrundkörper verbunden wird.

Das Bodenelement kann einen größeren Querschnitt aufweisen als der Pfahlgrundkörper. Nach einer vorteilhaften Ausgestaltung der Erfindung ist jedoch vorgesehen, dass das Bodenelement einen kleineren Querschnitt aufweist als der Pfahlgrundkörper. Bevorzugt ist das Bodenelement zylinderartig mit einem einen vorzugsweise bis auf den stabförmigen Endabschnitt konstanten, im Vergleich zum Durchmesser des Pfahlgrundkörpers kleineren Durchmesser aufweisenden, kreisförmigen Querschnitt ausgebildet. Der im Vergleich zum Pfahlgrundkörper kleinere Querschnitt des Bodenelements ermöglicht auf vorteilhafte Weise die Einsparung von Materialkosten für das Bodenelement.

Der stabförmige Endabschnitt kann parallel zur Längsachse des Pfahlgrundkörpers am Bodenelement angeordnet sein. Nach einer vorteilhaften Ausgestaltung der Erfindung ist jedoch vorgesehen, dass der mindestens eine stabförmige Endabschnitt des Bodenelements koaxial zur Längsachse des Pfahlgrundkörpers angeordnet ist. Der stabförmige Endabschnitt ist an einem dem Verbindungsabschnitt gegenüberliegenden Ende des Bodenelements angeordnet. Die koaxiale Anordnung des stabförmigen Endabschnitts ermöglicht beim Einbringen des Weidezaunpfahls in einen Untergrund auf vorteilhafte Weise eine optimale Kraftübertragung vom manuell bewegten Pfahlgrundkörper über das Bodenelement zum stabförmigen Endabschnitt und gewährleistet dadurch, dass der Weidezaunpfahl einfacher und mit einer geringeren manuellen Kraftaufbringung in einem Untergrund eingebracht werden kann.

Der Verbindungsabschnitt kann eine glatte vom Pfahlgrundkörper umschlossene Mantelfläche aufweisen. Nach einer vorteilhaften Weiterbildung der Erfindung ist jedoch vorgesehen, dass der Verbindungsabschnitt mindestens einen Hinterschnitt zur Verbesserung einer Verbindung zwischen Pfahlgrundkörper und Bodenelement aufweist. Ein Hinterschnitt, bzw. eine Hinterschneidung ist eine strukturelle Prägung und/oder Hervorhebung auf der Mantelfläche des Verbindungsabschnitts. Der Hinterschnitt kann beispielsweise parallel und/oder senkrecht zur Längsachse des Pfahlgrundkörpers auf dem Verbindungsabschnitt angeordnet sein. Alternativ ist der Hinterschnitt spiralförmig ausgebildet und koaxial zur Längsachse des Pfahlgrundkörpers auf dem Verbindungsabschnitt angeordnet.

Durch den mindestens einen am Verbindungsabschnitt angeordneten Hinterschnitt kann auf vorteilhafte Weise eine zuverlässige Verbindung mit besonders hoher Festigkeit zwischen dem Bodenelement und dem Pfahlgrundkörper ermöglicht werden. Überdies kann einer unerwünschten Trennung dieser Verbindung während eines Einbringens des Weidezaunpfahls in einen Untergrund entgegengewirkt werden.

Nach einer vorteilhaften Weiterbildung der Erfindung ist vorgesehen, dass das Bodenelement einen Stützabschnitt aufweist. Der Stützabschnitt ist zylinderartig ausgebildet und weist vorzugsweise mindestens eine Krümmung auf. Darüber hinaus ist der Stützabschnitt bevorzugt in der Nähe des zweiten Endes des Pfahlgrundkörpers an dem Bodenelement angeordnet. Durch den Stützabschnitt kann auf vorteilhafte Weise die Stabilität des Weidezaunpfahls erhöht und das Risiko eines unerwünschten Umkippens des Weidezaunpfahls im Untergrund reduziert werden.

Nach einer besonders vorteilhaften Ausgestaltung der Erfindung ist vorgesehen, dass der Stützabschnitt einen zweiten stabförmigen Endabschnitt aufweist. Der Stützabschnitt weist einen, bevorzugt zum ersten stabförmigen Endabschnitt parallel angeordneten zweiten stabförmigen Endabschnitt auf. Dieser ist vorzugsweise wie der erste stabförmige Endabschnitt ausgebildet. Dadurch kann auf besonders vorteilhafte Weise gewährleistet werden, dass der Weidezaunpfahl auch mit einem einen Stützabschnitt aufweisenden Bodenelement zuverlässig und schnell in einen Untergrund einbringbar ist.

Der Stützabschnitt kann z.B. über eine stoffschlüssige Verbindung, z.B. eine Schweißverbindung oder eine kraftschlüssige Verbindung, z.B. eine Schraubverbindung, mit dem Bodenelement verbunden sein. Nach einer äußerst vorteilhaften Weiterbildung der Erfindung ist jedoch vorgesehen, dass der Stützabschnitt einstückig mit dem Bodenelement ausgebildet ist. Der Stützabschnitt ist demnach aus einem metallischen Werkstoff, bzw. bevorzugt dem gleichen Werkstoff wie das Bodenelement gebildet. Überdies weist der Stützabschnitt neben der Krümmung zwei geradlinige Stababschnitte auf, wobei ein erster Stababschnitt senkrecht und ein zweiter Stababschnitt parallel zum Bodenelement angeordnet ist. Der erste Stababschnitt grenzt an das Bodenelement an und am zweiten Stababschnitt ist der zweite stabförmige Endabschnitt angeordnet. Dadurch kann auf äußerst vorteilhafte Weise ein einen Stützabschnitt aufweisendes Bodenelement mit hoher Stabilität bei gleichzeitig niedrigeren Herstellungskosten ermöglicht werden.

Nachstehend wird ein Ausführungsbeispiel der Erfindung mit Bezug auf die Zeichnungen erläutert. In den Zeichnungen zeigen:
- Fig. 1: eine Frontansicht auf eine erste Ausführungsform eines Weidezaunpfahls mit einer Detailansicht A auf ein Ende des Weidezaunpfahls;
- Fig. 2: einen Längsschnitt durch den Weidezaunpfahl aus Fig. 1 und
- Fig. 3: eine Frontansicht auf eine zweite Ausführungsform eines Weidezaunpfahls.

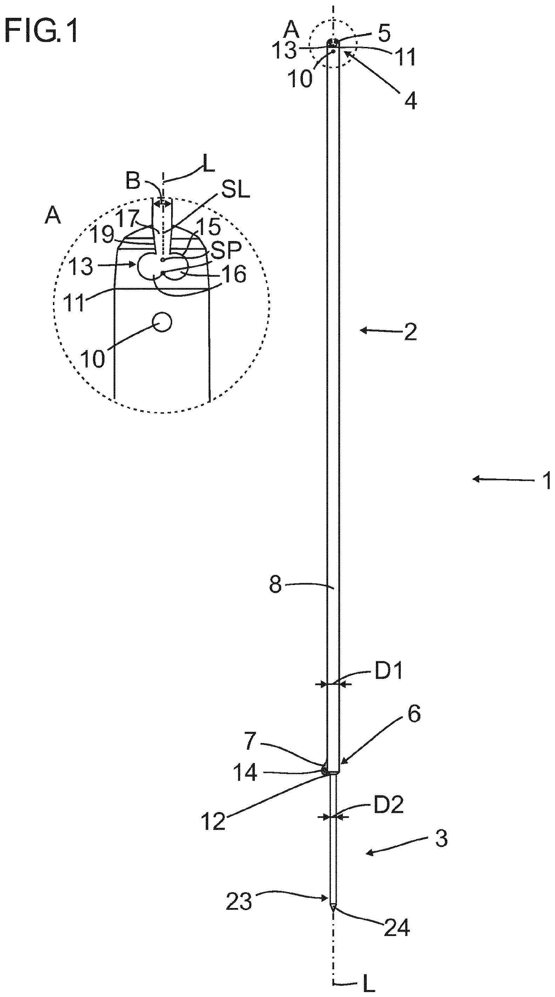

- In Fig. 1: ist eine Frontsicht auf eine erste Ausführungsform eines Weidezaunpfahls 1 darge-
stellt. Der Weidezaunpfahl 1 weist einen Pfahlgrundkörper 2 und ein aus einem metallischen Werkstoff gebildetes Bodenelement 3 mit einer Oberflächenbeschichtung aus Zink auf. An einem ersten Ende 4 ist ein Aufnahmeelement 5 und an einem zweiten Ende 6 des Pfahlgrundkörpers 2 ist ein Vorsprung 7 angeordnet.

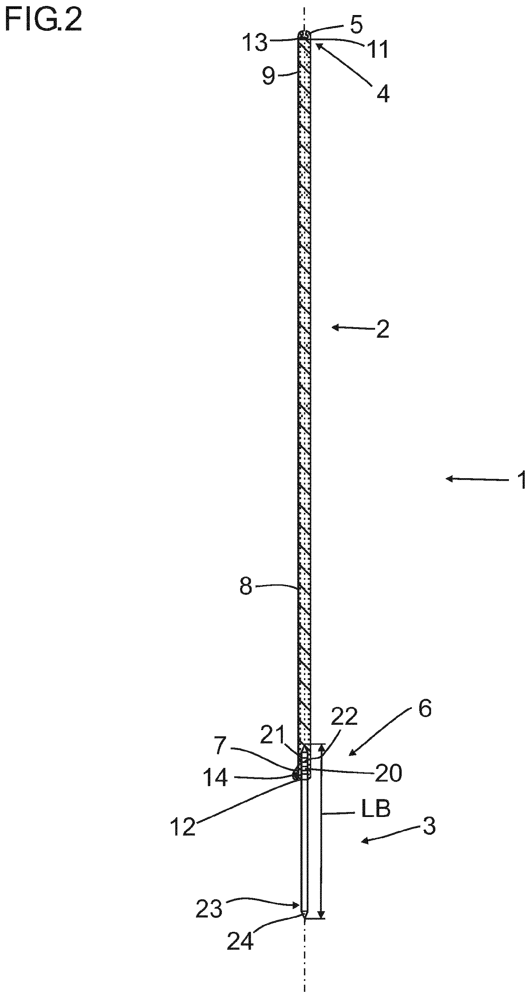

Der Pfahlgrundkörper 2 ist zylinderartig ausgebildet und weist eine Mantelfläche 8 mit einem kreisförmigen Querschnitt auf. Überdies ist der Pfahlgrundkörper 2 aus einem Polyamidwerkstoff, z.B. PA6, gebildet und mit Glasfasern 9, z.B. Kurzglasfasern, verstärkt Die Glasfasern 9 sind innerhalb des Polyamidwerkstoffs am Pfahlgrundkörper 2 angeordnet. Fig. 2 zeigt einen Längsschnitt durch den Weidezaunpfahl 1. Die Glasfasern 9 sind entlang einer Längsachse L des Pfahlgrundkörpers 2 vom Angusspunkt 10 in Richtung auf das zweite Ende 6 des Pfahlgrundkörpers 2 ausgerichtet. Darüber hinaus sind die Glasfasern 9 im Wesentlichen parallel zur Längsachse L angeordnet. Ferner weist der Pfahlgrundkörper 2 einen Glasfaseranteil von 30 Gew.-% auf.

Der Pfahlgrundkörper 2 ist am ersten Ende 4 angegossen worden (vgl. Fig. 1). Dadurch weist der Pfahlgrundkörper 2 einen Angusspunkt 10 auf, der im Bereich des ersten Endes 4 beabstandet zu einer ersten Stirnfläche 11 auf der Mantelfläche 8 angeordnet ist. Die erste Stirnfläche 11 ist am ersten Ende 4 des Pfahlgrundkörpers 2 angeordnet und durch den abschließenden Querschnitt am ersten Ende 4 definiert.

Der Pfahlgrundkörper 2 ist einstückig mit dem Aufnahmeelement 5 und dem Vorsprung 7 ausgebildet. Das Aufnahmeelement 5 liegt mit einer Unterseite (nicht dargestellt) an der ersten Stirnfläche 11 an. Überdies ist die Unterseite des Aufnahmeelements 5 deckungsgleich zur ersten Stirnfläche 11 ausgebildet. Der Vorsprung 7 ist auf der Mantelfläche 8 des Pfahlgrundkörpers 2 angeordnet und grenzt an eine am zweiten Ende 6 angeordnete zweite Stirnfläche 12 an, die durch den abschließenden Querschnitt am zweiten Ende 6 definiert ist. Ferner erhebt sich der Vorsprung 7 in eine von der Mantelfläche 8 abgewandte Richtung.

Das Aufnahmeelement 5 weist eine erste Ausnehmung 13 zur Aufnahme eines ersten Abschnitts eines Weidezaunnetztes (nicht dargestellt) und der Vorsprung 7 weist eine zweite Ausnehmung **14** zur Aufnahme eines zweiten Abschnitts eines Weidezaunnetztes (nicht dargestellt) auf. Die erste Ausnehmung 13 weist einen doppelkreisförmigen Querschnitt 15 mit zwei kreisförmigen Bereichen 16 auf. Der doppelkreisförmige Querschnitt 15 ist senkrecht zur Längsachse L des Pfahlgrundkörpers 2 angeordnet. Die beiden kreisförmigen Bereiche 16 schneiden sich in zwei auf der Längsachse L angeordneten Schnittpunkten SP. Demnach ist die erste Ausnehmung 13 ein doppelkreisförmiger, das Aufnahmeelement 5 durchdringender freier Bereich. Entlang der Längsachse L geht die erste Ausnehmung 13 in der vom Pfahlgrundkörper 2 abgewandten Richtung in eine Öffnung 17 über. Die Breite B der Öffnung 17 nimmt entlang der Längsachse L stetig zu. Daher weist die Öffnung eine trapezförmigen Querschnitt 19 auf, dessen Symmetrielinie SL parallel zu der Längsachse L des Pfahlgrundkörpers 2 angeordnet ist. Die zweite Ausnehmung 14 ist ein kreisförmiger, den Vorsprung 7 durchdringender freier Bereich.

Das Bodenelement 3 ist koaxial zur Längsachse L am zweiten Ende 6 des Pfahlgrundkörpers 2 angeordnet. Das Bodenelement 3 ist zylinderartig ausgebildet und weist einen im Vergleich zum Durchmesser D1 des Pfahlgrundkörpers 2 kleineren Durchmesser D2 aufweisenden, kreisförmigen Querschnitt auf. Darüber hinaus weist das Bodenelement 3 einen vom Pfahlgrundkörper 2 umschlossenen Verbindungsabschnitt 20 auf. Dieser erstreckt sich über ein Fünftel der Länge des Bodenelements 3. Am Verbindungsabschnitt 20 ist mindestens ein sich von der Mantelfläche 21 des Verbindungsabschnitts 20 hervorhebender Hinterschnitt 22 angeordnet. Der Hinterschnitt 22 ist senkrecht zur Längsachse L des Pfahlgrundkörpers 2 angeordnet.

Das Bodenelement 3 weist einen ersten stabförmigen Endabschnitt 23 auf, der koaxial zu der Längsachse L des Pfahlgrundkörpers 2 angeordnet ist und einstückig mit dem Bodenelement 3 ausgebildet ist. Ferner ist der erste stabförmige Endabschnitt 23 gegenüberliegend zum Verbindungsabschnitt 20 am Bodenelement 3 angeordnet und weist überdies eine Verjüngung in Form einer Spitze 24 auf.

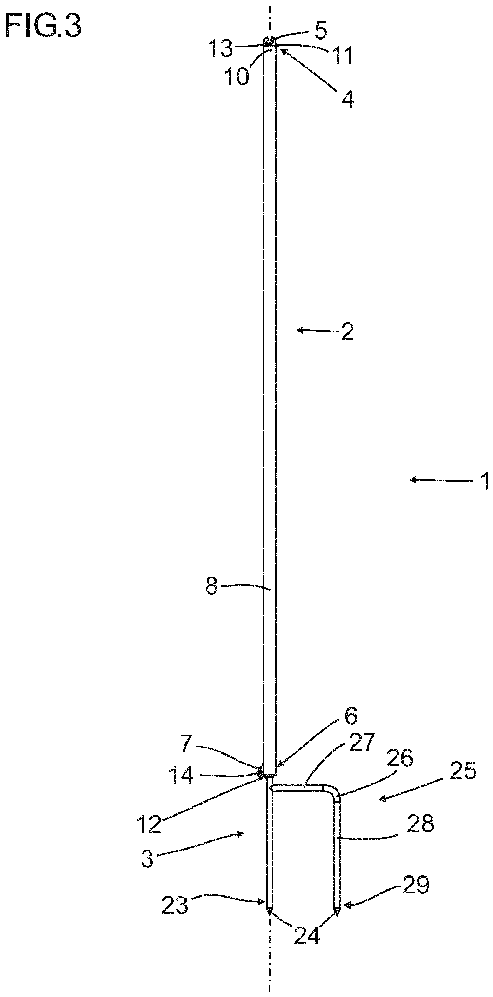

Fig. 3 zeigt eine zweite Ausführungsform des Weidezaunpfahls 1. Die beiden beispielhaften Ausführungsformen des Weidezaunpfahls 1 unterscheiden sich durch unterschiedliche Ausführungsbeispiele des Bodenelements 3. Gleiche Bauteile weisen die gleichen Bezeichnungen auf. In der zweiten Ausführungsform des Weidezaunpfahls 1 ist das Bodenelement 3 weitestgehend wie in der ersten Ausführungsform ausgebildet. Darüber hinaus weist das Bodenelement 3 einen Stützabschnitt 25 auf. Der Stützabschnitt 25 ist einstückig mit dem Bodenelement 3 ausgebildet und weist eine Krümmung 26 sowie zwei geradlinige Stababschnitte auf, wobei ein erster Stababschnitt 27 senkrecht und ein zweiter Stababschnitt 28 parallel zum Bodenelement 3 angeordnet ist. Der erste Stababschnitt 27 grenzt in der Nähe des zweiten Endes 6 des Pfahlgrundkörper 2 an das Bodenelement 3 an und am zweiten Stababschnitt 28 ist ein zweiter stabförmiger Endabschnitt 29 angeordnet. Der zweite stabförmige Endabschnitt 29 ist wie der erste stabförmige Endabschnitt 23 ausgebildet und parallel zu diesem angeordnet.

Durch den Verbund aus dem Polyamidwerkstoff und den Glasfasern weist der Weidezaunpfahl 1 eine hohe Bruchfestigkeit und gleichermaßen eine hohe Steifigkeit.

### Bezugszeichenliste

- 1: Weidezaunpfahl
- 2: Pfahlgrundkörper
- 3: Bodenelement
- 4: erstes Ende des Pfahlgrundkörpers
- 5: Aufnahmeelement
- 6: zweites Ende des Pfahlgrundkörpers
- 7: Vorsprung
- 8: Mantelfläche des Pfahlgrundkörpers
- 9: Glasfaser
- 10: Angusspunkt
- 11: erste Stirnfläche des Pfahlgrundkörpers
- 12: zweite Stirnfläche des Pfahlgrundkörpers
- 13: erste Ausnehmung
- 14: zweite Ausnehmung
- 15: doppelkreisförmiger Querschnitt
- 16: kreisförmiger Bereich
- 17: Öffnung
- 19: trapezförmiger Querschnitt
- 20: Verbindungsabschnitt
- 21: Mantelfläche des Verbindungsabschnitts
- 22: Hinterschnitt
- 23: erster stabförmiger Endabschnitt
- 24: Spitze
- 25: Stützabschnitt
- 26: Krümmung
- 27: erster Stababschnitt
- 28: zweiter Stababschnitt
- 29: zweiter stabförmiger Endabschnitt
- B: Breite der Öffnung
- L: Längsachse des Pfahlgrundkörpers
- LB: Länge des Bodenelements
- SL: Symmetrielinie der Öffnung
- SP: Schnittpunkte der kreisförmigen Bereiche
- D1: Durchmesser des Pfahlgrundkörpers
- D2: Durchmesser des Bodenelements

## Patentansprüche

1. Weidezaunpfahl für Weidezaunnetze, mit
- einem durch Glasfasern (9) verstärkten Pfahlgrundkörper (2),
- einem in einem Bereich eines ersten Endes (4) des Pfahlgrundkörpers (2) angeordneten Aufnahmeelement (5) mit einer ersten Ausnehmung (13) zur Aufnahme eines ersten Abschnitts des Weidezaunnetzes,
- einem in einem Bereich eines dem ersten Ende (4) gegenüberliegenden zweiten Endes (6) des Pfahlgrundkörpers (2) angeordneten Vorsprung (7) mit einer zweiten Ausnehmung (14) zur Aufnahme eines zweiten Abschnitts des Weidezaunnetzes und
- einem im Bereich des zweiten Endes (6) des Pfahlgrundkörpers (2) angeordneten Bodenelement (3) mit mindestens einem ersten stabförmigen Endabschnitt (23),
**dadurch gekennzeichnet, dass** der Pfahlgrundkörper (2) zur Ausrichtung der Glasfasern (9) entlang einer Längsachse (L) des Pfahlgrundkörpers (2) in einem Bereich des ersten Endes (4) oder in einem Bereich des zweiten Endes (6) angegossen worden ist.

2. Weidezaunpfahl nach Anspruch 1 oder 2, **dadurch gekennzeichnet, dass** der Pfahlgrundkörper (2) einen Anteil von 10- 60 %, bevorzugt 20- 40 %, besonders bevorzugt 30 % an Glasfasern (9) aufweist.

3. Weidezaunpfahl nach einem oder mehrerer der vorherigen Ansprüche, **dadurch gekennzeichnet, dass** der Pfahlgrundkörper (2) einstückig mit dem Aufnahmeelement (5) und/oder dem Vorsprung (7) ausgebildet ist.

4. Weidezaunpfahl nach einem oder mehrerer der vorherigen Ansprüche, **dadurch gekennzeichnet, dass** die erste Ausnehmung (13) einen zur Längsachse (L) des Pfahlgrundkörpers (2) senkrecht angeordneten doppelkreisförmigen Querschnitt (15) aufweist.

5. Weidezaunpfahl nach einem oder mehrerer der vorherigen Ansprüche, **dadurch gekennzeichnet, dass** die erste Ausnehmung (13) entlang der Längsachse (L) in der vom Pfahlgrundkörper (2) abgewandten Richtung in eine Öffnung (17) übergeht.

6. Weidezaunpfahl nach Anspruch 5, **dadurch gekennzeichnet, dass** die Breite (B) der Öffnung (17) entlang der Längsachse (L) des Pfahlgrundkörpers (2) stetig zunimmt oder abnimmt.

7. Weidezaunpfahl nach einem oder mehrerer der vorherigen Ansprüche, **dadurch gekennzeichnet, dass** das Bodenelement (3) aus einem metallischen Werkstoff gebildet ist.

8. Weidezaunpfahl nach einem oder mehrerer der vorherigen Ansprüche, **dadurch gekennzeichnet, dass** das Bodenelement (3) einen vom Pfahlgrundkörper (2) umschlossenen Verbindungsabschnitt (20) aufweist, der sich über mindestens ein Drittel, bevorzugt ein Viertel, besonders bevorzugt ein Fünftel der Länge (LB) des Bodenelements (3) erstreckt.

9. Weidezaunpfahl nach einem oder mehrerer der vorherigen Ansprüche, **dadurch gekennzeichnet, dass** das Bodenelement (3) einen kleineren Querschnitt aufweist als der Pfahlgrundkörper (3).

10. Weidezaunpfahl nach einem oder mehrerer der vorherigen Ansprüche, **dadurch gekennzeichnet, dass** der erste stabförmige Endabschnitt (2) des Bodenelements (3) koaxial zur Längsachse (L) des Pfahlgrundkörpers (2) angeordnet ist.

11. Weidezaunpfahl nach Anspruch 8, **dadurch gekennzeichnet, dass** der Verbindungsabschnitt (20) mindestens einen Hinterschnitt (22) zur Verbesserung der Verbindung zwischen Pfahlgrundkörper (2) und Bodenelement (3) aufweist.

12. Weidezaunpfahl nach einem oder mehrerer der vorherigen Ansprüche, **dadurch gekennzeichnet, dass** das Bodenelement (3) einen Stützabschnitt (25) aufweist.

13. Weidezaunpfahl nach Anspruch 12, **dadurch gekennzeichnet, dass** der Stützabschnitt (25) einen zweiten stabförmigen Endabschnitt (29) aufweist.

14. Weidezaunpfahl nach Anspruch 12, **dadurch gekennzeichnet, dass** der Stützabschnitt (25) einstückig mit dem Bodenelement (3) ausgebildet ist.

## Claims

1. Pasture fence post for pasture fence nets, comprising
- a post base body (2) reinforced by glass fibers (9),
- a receiving element (5) arranged in an area of a first end (4) of the post base body (2) and having a first recess (13) for receiving a first section of the pasture fence net,
- a protrusion (7) arranged in an area of a second end (6) of the post base body (2) opposite the first end (4) and having a second recess (14) for receiving a second section of the pasture fence net, and
- a ground element (3) arranged in the area of the second end (6) of the post base body (2) and having at least one first rod-shaped end section (23),
**characterized in that** the post base body (2) has been molded to align the glass fibers (9) along a longitudinal axis (L) of the post base body (2) in an area of the first end (4) or in an area of the second end (6).

2. Pasture fence post according to claim 1 or 2, **characterized in that** the post base body (2) has a proportion of 10-60%, preferably 20-40%, particularly preferably 30% of glass fibers (9).

3. Pasture fence post according to one or more of the previous claims, **characterized in that** the post base body (2) is formed integrally with the receiving element (5) and/or the protrusion (7).

4. Pasture fence post according to one or more of the previous claims, **characterized in that** the first recess (13) has a double circular cross section (15) arranged perpendicular to the longitudinal axis (L) of the post base body (2).

5. Pasture fence post according to one or more of the previous claims, **characterized in that** the first recess (13) merges into an opening (17) along the longitudinal axis (L) in the direction facing away from the post base body (2).

6. Pasture fence post according to claim 5, **characterized in that** the width (B) of the opening (17) increases or decreases continuously along the longitudinal axis (L) of the post base body (2).

7. Pasture fence post according to one or more of the previous claims, **characterized in that** the ground element (3) is formed of a metallic material.

8. Pasture fence post according to one or more of the previous claims, **characterized in that** the ground element (3) has a connection section (20) which is enclosed by the post base body (2) and extends over at least one third, preferably one quarter, particularly preferably one fifth of the length (LB) of the ground element (3).

9. Pasture fence post according to one or more of the previous claims, **characterized in that** the ground element (3) has a smaller cross section than the post base body (3).

10. Pasture fence post according to one or more of the previous claims, **characterized in that** the first rod-shaped end section (2) of the ground element (3) is arranged coaxially to the longitudinal axis (L) of the post base body (2).

11. Pasture fence post according to claim 8, **characterized in that** the connection section (20) comprises at least one undercut (22) for improving the connection between the post base body (2) and the ground element (3).

12. Pasture fence post according to one or more of the previous claims, **characterized in that** the ground element (3) comprises a support section (25).

13. Pasture fence post according to claim 12, **characterized in that** the support section (25) comprises a second rod-shaped end section (29).

14. Pasture fence post according to claim 12, **characterized in that** the support section (25) is formed integrally with the ground element (3).

## Revendications

1. Poteau de clôture de pâturage pour filets de clôture de pâturage, comprenant
- un corps de base de poteau (2) renforcé par des fibres de verre (9),
- un élément de réception (5) disposé dans la zone d'une première extrémité (4) du corps de base du poteau (2) et présentant un première évidement (13) pour recevoir une première section du filet de clôture de pâturage,
- une protubérance (7) disposée dans une zone de la deuxième extrémité (6) du corps de base du poteau (2) opposée à la première extrémité (4) et présentant un deuxième évidement (14) pour recevoir une deuxième section du filet de clôture de pâturage, et
- un élément de sol (3) disposé dans la zone de la deuxième extrémité (6) du corps de base du poteau (2) et comportant au moins une première section d'extrémité en forme de tige (23),
**caractérisé en ce que** le corps de base du poteau (2) a été moulé pour aligner les fibres de verre (9) le long d'un axe longitudinal (L) du corps de base du poteau (2) dans une zone de la première extrémité (4) ou dans une zone de la deuxième extrémité (6).

2. Poteau de clôture de pâturage selon la revendication 1 ou 2, **caractérisé en ce que** le corps de base du poteau (2) a une proportion de 10-60%, de préférence 20-40%, particulièrement de préférence 30% de fibres de verre (9).

3. Poteau de clôture de pâturage selon une ou plusieurs des revendications précédentes, **caractérisé en ce que** le corps de base du poteau (2) est formé intégralement avec l'élément de réception (5) et/ou la protubérance (7).

4. Poteau de clôture de pâturage selon une ou plusieurs des revendications précédentes, **caractérisé en ce que** le premièr évidement (13) présente une double section circulaire (15) disposée perpendiculairement à l'axe longitudinal (L) du corps de base du poteau (2).

5. Poteau de clôture de pâturage selon une ou plusieurs des revendications précédentes, **caractérisé en ce que** le premier évidement (13) se fond dans une ouverture (17) le long de l'axe longitudinal (L) dans la direction opposée au corps de base du poteau (2).

6. Poteau de clôture de pâturage selon la revendication 5, **caractérisé en ce que** la largeur (B) de l'ouverture (17) augmente ou diminue continuellement le long de l'axe longitudinal (L) du corps de base du poteau (2).

7. Poteau de clôture de pâturage selon une ou plusieurs des revendications précédentes, **caractérisé en ce que** l'élément de sol (3) est formé d'un matériau métallique.

8. Poteau de clôture de pâturage selon une ou plusieurs des revendications précédentes, **caractérisé en ce que** l'élément de sol (3) a une section de connexion (20) qui est entourée par le corps de base du poteau (2) et s'étend sur au moins un tiers, de préférence un quart, particulièrement de préférence un cinquième de la longueur (LB) de l'élément de sol (3).

9. Poteau de clôture de pâturage selon l'une ou plusieurs des revendications précédentes, **caractérisé par le fait que** l'élément de sol (3) a une section transversale plus petite que le corps de base du poteau (3).

10. Poteau de clôture de pâturage selon une ou plusieurs des revendications précédentes, **caractérisé en ce que** la première section d'extrémité en forme de tige (2) de l'élément de sol (3) est disposée coaxialement à l'axe longitudinal (L) du corps de base du poteau (2).

11. Poteau de clôture de pâturage selon la revendication 8, **caractérisé en ce que** la section de connexion (20) comprend au moins une contre-dépouille (22) pour améliorer la connexion entre le corps de base du poteau (2) et l'élément de sol (3).

12. Poteau de clôture de pâturage selon une ou plusieurs des revendications précédentes, **caractérisé en ce que** l'élément de sol (3) comprend une section de support (25).

13. Poteau de clôture de pâturage selon la revendication 12, **caractérisé en ce que** la section de support (25) comprend une deuxième section d'extrémité en forme de tige (29).

14. Poteau de clôture de pâturage selon la revendication 12, **caractérisé en ce que** la section de support (25) est formée intégralement avec l'élément de sol (3).
